# EUROPEAN PATENT SPECIFICATION

(11) **EP 4 601 475 B1**
(45) Date of publication and mention of the grant of the patent: **05.08.2026**
(21) Application number: 23786288.3
(22) Date of filing: 12.10.2023
(51) Int. Cl.: A23C 19/16, A23L 29/00, A23L 29/10, A23P 20/10

(54) **COMPOSITION FOR COATING CHEESE**
ZUSAMMENSETZUNG ZUR BESCHICHTUNG VON KÄSE
COMPOSITION POUR ENROBER DU FROMAGE

(30) Priority: 14.10.2022 EP 22201594
(43) Date of publication of application: 20.08.2025
(73) Proprietor: Procudan A/S, 6000 Kolding (DK)
(72) Inventor: DUELUND, Maja Slyngborg, 6000 Kolding (DK)
(74) Representative: Plougmann Vingtoft a/s
(86) International application number: PCT/EP2023/078310
(87) International publication number: WO 2024/079248

(56) References cited:
- EP-A1- 0 403 030
- BUCIO ADOLFO ET AL: "Characterization of Beeswax, Candelilla Wax and Paraffin Wax for Coating Cheeses", COATINGS, vol. 11, no. 3, 24 February 2021 (2021-02-24), pages 261, XP093029241, DOI: 10.3390/coatings11030261
- FIRAT YILMAZ ET AL: "The effects of beeswax coating on quality of Kashar cheese during ripening", INTERNATIONAL JOURNAL OF FOOD SCIENCE AND TECHNOLOGY, BLACKWELL SCIENTIFIC PUBLICATIONS, OXFORD, GB, vol. 47, no. 12, 14 August 2012 (2012-08-14), pages 2582 - 2589, XP071856317, ISSN: 0950-5423, DOI: 10.1111/J.1365-2621.2012.03137.X

## Description

### Technical field of the invention

The present invention relates to a composition for coating cheese, according to claim 1.

### Background of the invention

Traditionally, compositions for coating cheese is made of paraffin and microcrystalline wax. Both paraffin and microcrystalline wax are petroleum based and therefore such cheese coatings are based on the same building blocks as plastic. Waxes of paraffin alone are also known, but those waxes are more brittle than the waxes based on a combination of paraffin and microcrystalline wax and have a tendency to crack. Microcrystalline wax is a refined mixture of solid, saturated aliphatic and branched hydrocarbons, and is produced by de-oiling certain fractions from the petroleum refining process. Paraffin is a refined mixture of solid, saturated aliphatic hydrocarbons. Compositions for coating cheese based on microcrystalline wax and paraffin are strong and flexible such that they do not make cracks when stored on the cheese. Furthermore, they stay adhered to the cheese. Besides from being used in making cheese coatings, microcrystalline wax and paraffin are often used in the industries for making tire and rubber, candles, adhesives, corrugated boards, cosmetics, and castings.

However, there has been an increased demand for alternatives to petroleum based waxes. Hence, coating compositions for cheese that are free of petroleum based waxes, but made of bio-based ingredients, and having the same properties as petroleum based waxes, are sought for.

In EP 0 141 299 A2, a solution is disclosed where some of the wax of paraffin and microcrystalline cellulose is replaced with a coating layer of acetic acid esters of glycerides. EP 0 141 299 A2 discloses a method of coating hard cheese where cheese is first coated with a layer of a melt of one or more acetic acid ester of monoglycerides or fully hydrogenated or saturated edible fatty acids which are solid and waxy at room temperature, and then coating with a second layer of wax, the second layer being based on hydrocarbons. The second wax is disclosed to be consisting of a mixture of from 95% to 5% by weight of low melting microcrystalline waxes having a solidification point of 40°C to 60°C and 5% to 95% by weight plastic paraffines having a solidification point ranging from 45°C to 60°C. The coating with hydrocarbons (i.e. petroleum based waxes) in the second layer is necessary in order to protect the cheese against drying out and because of the low melting point of the first layer.

However, hydrocarbons are wished avoided. Further, the use of acetic acid esters of monoglycerides alone as a coating is not suitable because of the low melting point. Therefore, using acetic acid esters of monoglycerides alone as a coating will provide a coating that is too soft.

In EP 0 403 030 A1 is a coating preparation described that is free of mineral hydrocarbon waxes. The coating preparation comprises A) wax-like fatty acid glyceryl esters which are solid at room temperature and B) waxes which are not of mineral origin. Component A) is in general acetylated monoglycerides/diglycerides of edible oils, preferably acetic acid esters of monoglycerides/diglycerides. Component B) is described to be a wax of vegetable or animal origin. EP 0 403 030 A1 further discloses that to improve the structure and obtain a better cohesion, adjust viscosity, etc., it is possible to add polymer materials, such as plastics. The amount of acetylated mono/diglycerides in the coating preparation disclosed in EP 0 403 030 A1, however, is high, above 60%, and a composition for coating cheeses with such high amount of acetylated mono/diglycerides will be very soft. Further, such coating is prone to hydrolysis of the acetic acid moieties and there is a potential risk of oxidation of the fatty acid chains if based on unsaturated mono and diglycerides, This affects the shelf life of the cheese and reduces the possibility for use in coating of matured cheese products due to the coating lacking ability of protection the cheese from its surroundings. Acetylated mono and diglycerides are surface active compounds and will therefore tend to orientate in the interface with the hydrophobic moieties pointing towards the surrounding and the hydrophillic part pointing towards the cheese surface. This leads to a very sticky surface on the outside of the coating. A coating based on a high amount of acetylated mono/diglycerides will also result in an increased risk of microbial growth (mould) over time and hence a decreased storing time. BUCIO ADOLFO ET AL relates to cheese coatings, in particular to the characterization of different types of waxes and their uses as cheese coatings.

FIRAT YILMAZ ET AL studies the effects of beeswax coating on the quality of Kashar cheese during ripening.

Beeswax is also known to be used as coating for cheese, but when beeswax alone is used for coating of cheese, the wax becomes brittle when set and stored and may crack and pull away from the cheese due to lack of adhesion. Formation of cracks in the coating and coating that is pulled away from the cheese result in formation of moulds, results in water loss, change of cheese texture and will therefore lower the storage time of the cheese.

Hence, an improved composition for coating cheeses that are based on bio-based material, free of petroleum based waxes and having the same properties as petroleum based waxes would be advantageous. In particular, a bio-based composition for coating cheese that is strong, flexible, has good adhesion to the cheese and do not form cracks or damages would be advantageous.

### Summary of the invention

Thus, an object of the present invention is to provide a bio-based composition for coating cheese that solves the above mentioned problems of the prior art.

In particular, it is an object of the present invention to provide a composition for coating cheese that is made of bio-based ingredients only, does not comprise any petroleum-based waxes, but are strong, flexible and has other good properties as petroleum-based waxes. In particular, it is an object to provide a composition for coating cheese that is made of bio-based ingredients from vegetable or animal material that are not brittle, does not have the disadvantage of forming cracks or damages of the wax layer when stored, not being soft and having a low viscosity such that the coating layer of the composition is very thin. Further, it is an object to provide a bio-based composition for coating cheese that has a good adhesion to the cheese, is easily cut, solidifies quickly and gives a close surface on the cheese (for example, no microbial growth is formed on the coating), is stable against physical impact (for example can withstand handling of the cheese by handling equipment), has no visual colour migration, provides no off-taste to the cheese, and provides no odour when coated on the cheese.

It has surprisingly been found by the inventors of the present invention that a composition for coating cheese having a high content of beeswax in combination with at least one further compound selected from the group of unsaturated fatty acids and fatty acid methyl esters has properties similar to the petroleum-based waxes. For example, the composition for coating cheese according to the present invention is strong, flexible, does not form cracks, has a good adhesion to the cheese and solidifies quickly. Further, the composition for coating of cheese according to the invention is stable against physical impact, has no visual colour migration, provides no off-taste to the cheese, and the composition provides no odour to the cheese.

The inventors of the present invention have found that a composition for coating cheese based on beeswax alone is brittle and stiff and does therefore not have the elasticity and flexibility needed. Hence, coating compositions only made of beeswax are not suitable for coating cheese. However, the inventors of the present invention has also found that beeswax in a high amount in combination with at least one further compound selected from the group consisting of unsaturated fatty acids and fatty acid methyl esters will lead to a composition for coating cheeses having the needed flexibility and softness similar to petroleum-based coating compositions. In particular, the inventors of the present invention have found that a specific ratio between the beeswax and the at least one further compound selected from the group consisting of unsaturated fatty acids and fatty acid methyl esters results in a composition for coating cheese that have properties similar to the petroleum-based waxes.

Thus, the invention relates to a composition for coating cheese, according to claim 1.

Another aspect of the present invention relates to a cheese coated with the composition according to the invention.

### Brief description of the figures

Figure 1A and 1B show pictures of the break of plates made of different coating compositions. Figure 1A shows the break of a plate made of a coating composition evaluated as "preferred" while figure 1B shows the break of a plate made of a coating composition evaluated as "not useful".
Figure 2A-D shows pictures of different cheeses coated with different coating compositions.

The present invention will now be described in more detail in the following.

### Detailed description of the invention

The use of beeswax for preparing coatings for cheese is known by the skilled person, but as mentioned earlier a coating composition completely made of beeswax is known to be brittle and may crack and pull away from the cheese. Various tests has been made in small dairies within the cheese industry to use beeswax as coating material without any success due to the lack of flexibility and therefore cracking. However, the inventors of the present invention has surprisingly found that a high amount of beeswax can be used for preparing a composition for coating cheese, if the beeswax is in combination with a small amount a compound selected from the group of unsaturated fatty acids, fatty acid methyl esters and fatty alcohols.

### Definitions

Prior to discussing the present invention in further details, the following terms and conventions will first be defined:
All references to singular characteristics or limitations of the present invention shall include the corresponding plural characteristic or limitation, and vice versa, unless otherwise specified or clearly implied to the contrary by the context in which the reference is made.

All percentages referred to herein are percentages by weight unless otherwise stated. The term w/w" as in for example 1% w/w refers to a composition comprising 1% by weight of a compound.

The term "and/or" used in the context of "X and/or Y" should be interpreted as "X", or "Y", or "X and Y".

The term "bio-based" as in bio-based composition for coating cheese refers to the composition being of organic ingredients that is biological degradable. The term "bio-based" exclude petroleum-based compositions.

Unless defined otherwise, all technical and scientific terms used herein have the same meaning as commonly understood by one of ordinary skill in the art.

The inventors of the present invention have surprisingly found a composition for coating cheese having a high content of beeswax without containing any petroleum based waxes, but maintaining the properties of coating compositions for cheese made of petroleum-based waxes.

One of the properties of compositions for coating cheese that is considered good is good flexibility, such that the coating can be bend without breaking. This enables the cheese to "move" throughout the maturation time due to the biological organisms in the cheese resulting in rearrangement of the chemical components in the cheese (degradation of milk proteins). Further properties of the coating for cheeses that are important is the coating effect, solidification time, tensile strength, oxygen transmission rate (OTR), water vapor transmission rate (WVTR), viscosity, penetration and congealing point.

### Coating effect:

The coating effect describes the suitability of the coating composition is to be applied to the cheese. It is important that the coating is applied to the cheese in a layer thick enough to protect the cheese, but also in a layer thin enough to minimize packaging material and to be partly invisible. The thickness of the coating layer should also not give any issues during transport of the cheese on conveyor belts and/or by equipment for handling the cheeses, such as packaging robots. A good coating effect is obtained i) when the coating is flexible and therefore not cracking, ii) when the coating has enough strength to withstand the pressure from inside the cheese biological organisms and therefore keep the shape of the cheese, and iii) when the coating is properly adhered to the cheese surface and therefore no space is made for an air-pocket layer which can cause unwanted microbiological growth conditions.

### Flexibility:

The flexibility describes how flexible the coating composition is, i.e. the ability of the coating to be bend and turned without breaking. The coating should be able to be bend 180 degrees and turned 90 degrees without breaking. This also allows robot handling of the cheese after coating.

### Solidification time:

The solidification time of a composition for coating cheese is also important, since a too long solidification time will decrease production time during the cheese making production. The coating composition should be able to solidify within 15 seconds, and preferably faster. The solidification time should therefore be maximum up to 15 seconds, such as from 1 to 15 seconds. Preferably, the solidification time should be from 1 to 10 seconds and most preferably from 1 to 5 seconds.

### Tensile strength:

Tensile strength is a measurement of the maximum recorded force per cm² that can be applied to a sample of coating composition before the sample breaks.

Water vapor transmission rate (WVTR): WVTR describes the permeability of water/moisture through the coating material.

A good composition for coating has a low WVTR, such as a WVTR of maximum 150 g·mm/m²·day. It is undesired that moisture from surroundings enters the cheese coating and hence is able to amend the texture of the cheese. Further, loss of moisture from the cheese should be avoided since it will make the cheese more expensive and provide alterations in the texture.

Compositions for coating cheese having a WVTR of 150 g·mm/m²·day or less is acceptable. However, a WVTR of less than 50 g·mm/m²·day is preferred, such as a WVTR of 2-50 g·mm/m²·day.

### Viscosity:

By viscosity is meant the viscosity of the composition for coating cheese. The composition for coating cheese should have a viscosity in the range of 2 to 30 mPa·s for obtaining a good coating. Preferably, the viscosity should be in the range of from 5 to 20 mPa·s.

### Penetration:

The penetration of a composition for coating cheese is a measurement of the hardness of the coating composition.

The penetration is measured as decimillimeter (dmm) and should be in the range of 10 to 75 dmm. Preferably, the penetration should be in the range of 15 to 50 dmm.

### Congealing point:

The congealing point is a property of compositions for coating cheese that relates to when the coating composition begins to solidify.

By measuring the congealing point, the temperature at which a sample being cooled develops a "set" or is resistance to flow is measured. At that temperature, the coating composition may be at or close to the solid state, or it may be semisolid and quite unctuous, depending on the coating composition being tested. The congealing point should be in the range of from 45°C to 75°C. Preferably, the congealing point should be in the range of from 55°C to 75°C.

The invention relates to a composition for coating cheese comprising
a) beeswax in an amount of 70% to 95% by weight, and
b) at least one further compound selected from the group consisting of unsaturated fatty acids and fatty acid methyl esters in an amount of 2.5% to 30% by weight.

The composition for coating cheese according to the invention results in good or at least acceptable properties with regard to flexibility, coating effect, solidification time, tensile strength, water vapour transmission rate (WVTR), viscosity, penetration and congealing point. In particular, with regard to flexibility, coating effect, solidification time, penetration and congealing poin, that is considered the most important properties of the coating composition.

### Beeswax:

The amount of beeswax in the composition is in the range of from 70% to 95% by weight.

Preferably, the composition comprises bees wax in an amount of 75% to 95% by weight, more preferably in an amount of 80% to 95% by weight. Most preferably, the composition comprises beeswax in an amount of 85% to 95% by weight.

### Addition compound:

The composition for coating cheese according to the invention also comprises at least one further compound selected from the group consisting of unsaturated fatty acids and fatty acid methyl esters in an amount of 2.5% to 30% by weight. Most preferably, the at least one further compound is present in the composition in an amount of 5% to 20% by weight, most preferably in an amount of 5% to 15% by weight.

In the context of the present invention, the term "one further compound" refers to that the composition comprises a further compound besides from beeswax. Hence, the further compound is not part of the beeswax, but is added in addition to beeswax.

In an embodiment of the present invention, the at least one further compound in the composition comprises two or more compounds selected from the group consisting of unsaturated fatty acids and fatty acid methyl esters

### Unsaturated fatty acid:

The at least one further compound may be an unsaturated fatty acid. For example, the at least one further compound may be one or more unsaturated fatty acids, such as for example two or more unsaturated fatty acids.

The unsaturated fatty acid is in an embodiment of the present invention selected from the group consisting of oleic acid, linoleic acid, palmitoleic acid and erucic acid. More preferably, the unsaturated fatty acid is selected from the group consisting of oleic acid, linoleic acid and erucic acid. The unsaturated fatty acid is present in the composition in an amount of 2.5% to 30% by weight and most preferably in an amount of 5% to 15% by weight.

In another embodiment of the present invention, the at least one further compound present in the composition comprises two or more unsaturated fatty acid. For example, the composition comprises two or more of oleic acid, linoleic acid, palmitoleic acid and erucic acid, and in particular two or more of oleic acid, linoleic acid, and erucic acid. Most preferably, the composition comprises oleic acid and linoleic acid.

### Fatty acid methyl ester:

The fatty acid methyl ester may be both a methyl ester of a saturated fatty acid and a methyl ester of an unsaturated fatty acid.

If the fatty acid methyl ester is a methyl ester of a saturated fatty acid, the fatty acid methyl ester is preferably selected from the group consisting of methyl behenate, methyl palmitate and methyl stearate. The methyl ester of a saturated fatty acid is most preferably methyl behenate.

If the fatty acid methyl ester is a methyl ester of an unsaturated fatty acid, the fatty acid methyl ester is preferably selected from the group consisting of methyl oleate, methyl linoleate, methyl linolenate and methyl erucate.

The fatty acid methyl ester is present in the composition in an amount of 2.5% to 30% by weight, more preferably in an amount of 5% to 15% by weight.

Preferably, the fatty acid methyl ester is a methyl ester of a saturated fatty acid.

Combination of unsaturated fatty acids and fatty acid methyl esters:
In an embodiment of the present invention, the composition comprises at least two further compounds. The at least two further compounds may be a combination of two or more selected from the group consisting of unsaturated fatty acid and fatty acid methyl esters.

The combination may for example be one unsaturated fatty acid in combination with a fatty acid methyl ester.

Further, the at least two further compounds in the composition may be two or more unsaturated fatty acids, such as two or more selected from the group consisting of oleic acid, linoleic acid, palmitoleic acid and erucic acid. Preferably, the at least two further compounds in the composition comprises two or more unsaturated fatty acids selected from the group consisting of oleic acid, linoleic acid and erucic acid.

### Further embodiments of the composition for coating cheese:

In an embodiment of the invention:
a) beeswax is present in an amount of 85% to 95% by weight, and
b) at least one further compound selected from the group of unsaturated fatty acids and fatty acid methyl esters is present in an amount of 5% to 15% by weight.

In another embodiment of the invention, the composition further comprises one or more compound(s) selected from the group consisting of emulsifiers and vegetable waxes.

The one or more emulsifier may be selected from the group consisting of acetic acid esters of glycerides, lactic acid esters of glycerides, diacetyl tartaric esters of glycerides, esters of sorbitans and combinations thereof. Preferably the emulsifier is selected from the group consisting of acetic acid esters of glycerides, lactic acid esters of glycerides and diacetyl tartaric esters of glycerides. Most preferably, the emulsifier is acetic acid ester of glycerides.

In principle, the acetic acid ester may be any ester of a glyceride. However, preferably the acetic acid is an ester of monoglycerides, diglycerides or a combination thereof. More preferably, the acetic acid ester is an acetic acid ester of monoglycerides.

The lactic acid esters of glycerides may also be an ester of any glyceride, i.e. lactic acid esters of monoglycerides, diglycerides or a combination thereof. However, if lactic acid esters of glycerides are present in the composition of the invention, they are preferably present as lactic acid esters of mono-diglycerides.

The diacetyl tartaric esters of glycerides may also be an ester of any glyceride, i.e. diacetyl tartaric esters of monoglycerides, diglycerides or a combination thereof. However, preferably the diacetyl tartaric esters of glycerides are diacetyl tartaric esters of mono-diglycerides.

The esters of sorbitan may be any ester of a sorbitan, such as unsaturated sorbitan esters and saturated sorbitan esters. Preferally, the esters of sorbitan are saturated sorbitan esters selected from the group consisting of sorbitan tristearate and sorbitan monolaurate. For example, the esters of sorbitan are unsaturated sorbitan esters selected from the group consisting of sorbitan monooleate and sorbitan trioleate.

The emulsifier, if added to the composition, is most preferred acetic acid esters of monoglycerides from palm oil. However, especially a diacetyl tartaric ester of mono-diglycerides from rapeseed and/or palm based oils and esters of sorbitans is also useful.

In an embodiment of the invention, the composition comprises one or more emulsifier in an amount of 3% to 15% by weight, most preferably in an amount of 5% to 10% by weight.

The one or more vegetable wax may be selected from the group consisting of candelilla wax, carnauba wax, rice bran wax, coconut wax, palm-based wax, soy-based wax, rapeseed-based wax and combinations thereof. Preferably, the vegetable wax is one or more selected from the group consisting of candelilla wax, coconut wax, palm-based wax, soy-based wax and rapeseed-based wax. In a more preferred embodiment of the invention, the vegetable wax is one or more selected from the group consisting of candelilla wax, coconut wax, palm-based wax and soy-based wax. Most preferably, the vegetable wax is candelilla wax.

The term "palm-based" refers in the context of the present invention to a wax based on a palm product, such as palm wax and palm kernel wax.

The term "soy-based wax" refers in the context of the present invention to a wax based on a soy product or derivates thereof.

The term "rapeseed-based" refers in the context of the present invention to a wax based on a rapeseed product, such as rapeseed wax and either low or high eruca acid containing wax.

In an embodiment of the invention, the composition comprises one or more vegetable wax in an amount of 3% to 15% by weight, preferably in an amount of 5% to 10% by weight.

In a preferred embodiment of the composition for coating cheese according to the present invention, the composition does not comprise any petroleum-based waxes. For example, the composition according to the present invention does not comprise any paraffin-based waxes or any microcrystalline waxes.

Other ingredients typically used in a composition for coating cheese may also be present in the composition of the present invention. This could for example be coloring agents. The coloring agent may for example be coated on a food grade carrier like a sorbitan-ester.

In an aspect, the present invention also relates to a cheese coated with the composition according to the present invention.

It should be noted that embodiments and features described in the context of one of the aspects of the present invention also apply to the other aspects of the invention.

The invention will now be described in further details in the following non-limiting examples.

### Examples

### Example 1: Methods

### Example 1.1: Method of measuring coating effect:

A sample of the different compositions for coating cheese was heated to 90°C and kept at this temperature during the testing. Blocks of hard yellow cheese was prepared. The blocks were 8 cm in length and had a cross-section of 9 cm². These cheese blocks are dipped in the different samples of coating compositions for 5 seconds to be coated with a layer of the coating composition. This may be repeated to provide a second layer of the coating composition on the cheese. The second layer is added when the coating adhere sufficiently to the cheese and is without cracks. The coating was evaluated after both a first layer and a second layer of coating. After storing for three days in 5-8°C, the coated cheese blocks was evaluated as either good, bad or not useful, depending on the visual coating layer and the adhesion of wax to the cheese.

Evaluated good: The cheese block is uniformed coated, no visible cracks, no cracking occurring when handled manually, and the coating is not changing during storage in refrigerator up to at least 3 weeks.

Evaluated poor: The cheese block is looking uniformly coated but with thin layer of coating on the sharp edges (a thick layer is needed to avoid cracks on the sharp edges), and cracking can occur when manually handled.

Evaluated not useful: The coating on the cheese block is not uniform, either very thin layer on all cheese sides and/or thick layer on part of the cheese sides. The coating is broken or split either instantly or after a few days in a refrigerator giving directly contact to the cheese and resulting in that the cheese is not protected.

### Example 1.2: Method of measuring flexibility

A sample of the different compositions for coating cheese was formed and moulded into a rectangular plate with semi-circular pieces. The length of the rectangular plate was 5 cm long and in the cross-sectional area is 0.42 cm^{2.} The flexibility of the plates were tested by bending the plates. Flexibility of the plates were evaluated as "yes" or "no". If the plates at room temperature, 23°C, can be bended 180 degrees and turned at least 90 degrees without breaking, the wax was evaluated as a "yes" for flexibility.

### Example 1.3: Method of measuring solidification time:

A 100 ml round-bottomed glass flask filled with rapeseed oil was kept at 23°C and 50% relative humidity (RH). The glass flask was immersed for 5 seconds in a melted sample of coating composition, melted at 90°C. The solidification time was determined as the time in seconds that elapsed between removal of the round-bottomed glass flask from the "bath" of melted coating composition and the time when a fingerprint was no longer visible on the coating when the solidified coating composition was touched at a point 45 degrees from the bottom of the round-bottomed flask.

Samples of coating composition that took more than 15 seconds to solidify, was considered too long time to solidify and hence not useful.

### Example 1.4: Method of measuring tensile strength:

Samples of different compositions for coating cheese was formed and moulded by hot compression moulding into a rectangular plate with semi-circular end pieces. The length of the rectangular plate is 9cm, the width is 1.5cm and the thickness is 0.3cm.

After storage at 23°C and 50% relative humidity (RH), the samples were tested in a tensile tester, ESM303 from MARK-10, by attaching the ends of the samples to the grips of the equipment/apparatus. The samples were stretched in the apparatus with a constant rate of 50 mm/min. When measuring the tensile strength, the grips used are G1061 from MARK-10.

The tensile strength is the maximum recorded force per cross-sectional area (cm²) before the sample breaks.

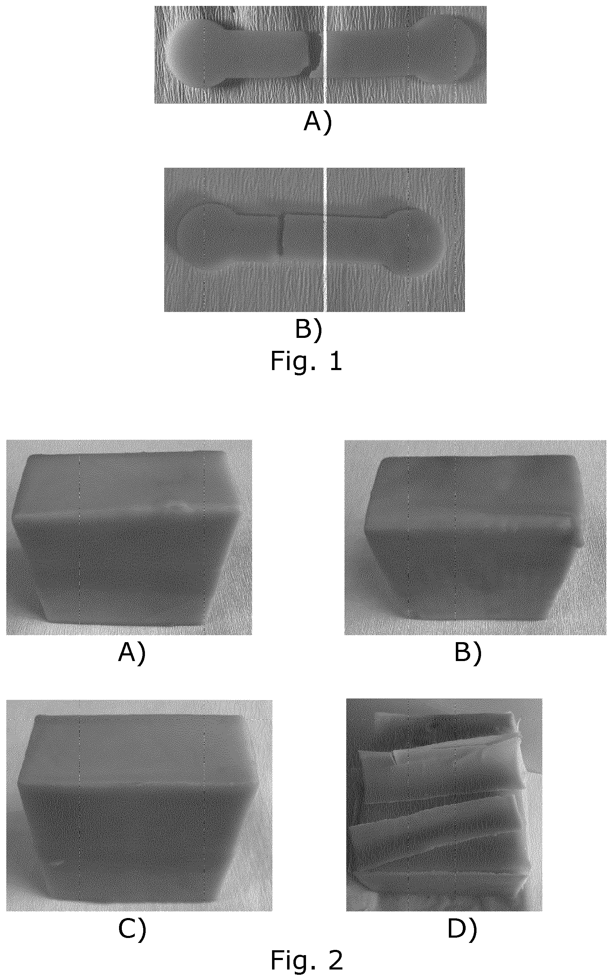

In figures 1A and 1B are samples of a preferred coating composition (figure 1A) and a not useful coating composition (figure 1B) shown.

The plate made of the preferred coating composition (figure 1A) has an uneven break which is the result of a non-brittle coating composition that is more elastic and flexible. On the contrary, the plate made of the coating composition that is not useful shows a very clear cut break. This is characteristic for very brittle coating compositions, since the components in the coating composition are not elastic or flexible.

### Example 1.5: Method of measuring water vapor transmission rate (WVTR):

WVTR describes the permeability of the coating material and the used method are a modified version of ASTM E96. The principles of the technique is the utilization of the physical laws about every organic conditions are trying to reach equilibrium and in this specific analysis the sample was placed in a testing cell with very low moisture content and the testing cell was placed in a cabinet with constant humidity and temperature. The equilibrium is then trying to occur by the internal of the testing cell absorbing moisture through the membrane of the coating composition. The less water vapor permeability, the less water can pass through the membrane of the coating composition and less weight uptake will be observed during measurement of the testing cells.

Samples of coating composition were prepared with a specific thickness and diameter corresponding to the surface of the testing cells. The weight of the coating membrane was noted and used in the permeability calculation after testing was performed. Afterwards, a given amount of a chemical moisture absorber was weighted into the testing cell and after the coating membrane were added to the testing cell as a lid, the mass of the total testing cell was noted. The testing cell was kept at a desired humidity (50% RH) and temperature (23°C) and was weighted with a specific interval of days. After the testing cell was weighted at least 8 times, the permeability was calculated to be g·mm/m²·day.

### Example 1.6: Method of measuring viscosity

Viscosity is measured by using the Standard Test Method for Apparent Viscosity of Hot Melt Adhesives and Coating Materials, ASTM D3236.

### Example 1.7: Method of measuring penetration:

Penetration is measured by using the Standard Test Method for Needle Penetration of waxes, ASTM D1321.

### Example 1.8: Congealing point:

The congealing point is measured by using the Standard Test Method for Congealing Point of waxes, ASTM D938

### Example 2: Analysing different compositions comprising different amounts of beeswax and the unsaturated fatty acid, oleic acid

Different samples of coating compositions was made comprising the amounts of beeswax and oleic acid as shown in table 1.

The different samples was analysed with respect to congealing point, penetration, viscosity, WVTR, OTR, tensile strength, flexibility, solidification time, and coating effect.

A beeswax from Novero GmbH was used.

Oleic acid from Sigma Aldrich was used

**Table1:**

| | Beeswax (% by weight) | Oleic acid (% by weight) | Acceptance level |
|---|---|---|---|
| Sample 1 | 100 | 0.0 | Not useful |
| Sample 2 | 99.5 | 0.5 | Poor |
| Sample 3 | 99 | 1.0 | Acceptable |
| Sample 4 | 97.5 | 2.5 | Acceptable |
| Sample 5 | 95 | 5.0 | Preferred |
| Sample 6 | 90 | 10.0 | Preferred |
| Sample 7 | 85 | 15.0 | Preferred |
| Sample 8 | 80 | 20 | Acceptable |

The evaluation "Poor", "acceptable", Preferred" and "Not useful" is based on analyses of congealing point, penetration, viscosity, WVTR, tensile stength, flexibility, solidification time, and coating effect as shown in table 2.

**Table 2:**

| Sample No. | 1 | 2 | 3 | 4 | 5 | 6 | 7 | 8 |
|---|---|---|---|---|---|---|---|---|
| Congealing point (°C) | 64 | 61.5 | 62 | 63.5 | 62.3 | 62 | 60.7 | 60 |
| Penetration (dmm) | 18.5 | 27.1 | 28.3 | 28.4 | 34.7 | 44.4 | 53.6 | 54.2 |
| Viscosity (mPa·s) | 9.8 | 10.3 | 9.9 | 9.6 | 9.9 | 9.3 | 9.8 | 8.4 |
| WVTR (g·mm/m²·day) | 6.2 | 2.5 | 5.6 | 3.8 | 4.3 | 3.1 | 14.2 | 6.0 |
| Tensile strength (MPa) | 1.5 | 1.0 | 0.94 | 0.94 | 0.69 | 0.49 | 0.37 | 0.37 |
| Flexibility (Yes/No) | No | No | Yes | Yes | Yes | Yes | Yes | Yes |
| Solidification time (sec) | 2.0 | 1.5 | 1.67 | 1.85 | 1.95 | 2.0 | 1.6 | 1.45 |
| Coating effect (visual) | Poor | Poor | Accept. | Accept. | Good | Good | Good | Accept. |
| Overall acceptance | Poor | Poor | Accept. | Accept. | Preferred | Preferred | Preferred | Accept. |

| | | | | | | | | |
|---|---|---|---|---|---|---|---|---|
| "Accept" refers to "Acceptable" | | | | | | | | |

A shown in table 1 and 2, it was found that a composition comprising only beeswax was considered "poor" for coating cheese. If 0.5% oleic acid was added to 99.5% beeswax, the composition was also considered "poor" as a coating composition. However, table 1 and 2 show that a composition comprising a high amount of beeswax, but comprising 1% and 2.5% oleic acid was considered acceptable as a coating composition, while a composition comprising 5% to 15% oleic acid was considered preferred as a coating composition. A composition comprising 20% oleic acid and 80% beeswax was considered acceptable.

Figure 2A-D shows pictures of cheeses with different coating compositions where the coating compositions were evaluated as either "not useful", "poor", "acceptable" and "preferred".

Figure 2A shows a cheese with a coating composition evaluated as "preferred". The coating composition evaluated as "preferred" has a good adhesion between the cheese and the coating composition and has no obvious beginnings of cracks on the coating layer on the sides or edges of the cheese.

Figure 2B shows a cheese with a coating composition evaluated as "acceptable". The coating composition evaluated as "acceptable" has a good adhesion between the cheese and the coating composition and has only a slightly risk of cracks on the edges of the cheese. These risk of cracks can be avoided by changing the application temperature and hence the viscosity which will give a thicker coating layer on the edges of the cheese.

Figure 2C shows a cheese with a coating composition evaluated as "poor". The coating composition evaluated as "poor" has visual cracks (or almost cracks) on the surface on the cheese, for example at the edges of the cheese.

Figure 2D shows a cheese with a coating composition evaluated as "not useful". The coating composition evaluated as "not useful" has no adhesion between the cheese and coating composition despite amending the application temperature.

### Example 3: Analysing the use of other unsaturated fatty acids vs. saturated fatty acids

An example was made to analyse other suitable unsaturated fatty acids than oleic acid in a composition with beeswax and compare it to the use of saturated fatty acids.

As unsaturated fatty acids, the following were analysed:
- oleic acid (C18:1) from Sigma Aldrich
- linoleic acid (C18:2) from Sigma Aldrich
- erucic acid (C22:1) from TCI Europe NL

As saturated fatty acids, the following were analysed:
- palmitic acid (C16:0) from Sigma Aldrich
- stearic acid (C18:0) from Sigma Aldrich
- behenic acid (C22:0) from TCI Europe NL

Table 3 shows different samples of coating compositions comprising beeswax and one or more of the above mentioned fatty acids. Table 3 shows the amount of the fatty acids in percentage by weight. Beeswax is added up to 100%

The different samples was analysed with respect to congealing point, penetration, flexibility, solidification time, and coating effect.

A beeswax from Novero GmbH was used.

The evaluation "Poor", "acceptable", Preferred" and "Not useful" is based on analyses of congealing point, penetration, flexibility, solidification time, and coating effect as shown in table 4.

**Table 3:**

| %-by weight | C18:1 | C18:2 | C22:1 | C16:0 | C18:0 | C22:0 | Acceptance level |
|---|---|---|---|---|---|---|---|
| Sample 9 | 5 | | | | | | Good |
| Sample 10 | 10 | | | | | | Good |
| Sample 11 | 5 | 5 | | | | | Good |
| Sample 12 | 1 | 1 | | | | | Good |
| Sample 13 | | 10 | | | | | Good |
| Sample 14 | | | | 10 | | | Poor |
| Sample 15 | | | | | 10 | | Poor |
| Sample 16 | | | | | | 5 | Poor |
| Sample 17 | | | 5 | | | | Acceptable |

As shown in table 3 and 4, a composition comprising a high amount of beeswax and different unsaturated fatty acids are suitable for coating cheeses.

Table 3 and 4 also show that combinations of different unsaturated fatty acids are suitable in combination with beeswax for coating cheeses.

In addition, table 3 and 4 show that saturated fatty acids are not suitable for use in compositions for coating cheese having a high amount of beeswax.

**Table 4:**

| Sample No. | 9 | 10 | 11 | 12 | 13 | 14 | 15 | 16 | 17 |
|---|---|---|---|---|---|---|---|---|---|
| Congealing point (°C) | 62.3 | 62 | 60 | 61 | 62.3 | 61.5 | 63 | 63 | 63 |
| Penetration (dmm) | 34.7 | 44.4 | 74.3 | 33.7 | 36.7 | 20.1 | 17.1 | 19.3 | 27.2 |
| Flexibility (Yes/No) | Yes | Yes | Yes | Yes | Yes | No | No | No | Yes |
| Solidification time (sec) | 1.95 | 2.0 | 1.6 | 1.8 | 1.6 | 2.0 | 1.7 | 1.9 | 1.4 |
| Coating effect (visual) | Good | Good | Good | Good | Good | Accepta. | Accepta. | Poor | Accepta. |
| Overall acceptance | Preferred | Preferred | Preferred | preferred | Preferred | Poor | Poor | Poor | Accepta. |

| | | | | | | | | | |
|---|---|---|---|---|---|---|---|---|---|
| "Accept" refers to "Acceptable | | | | | | | | | |

### Example 4: Analysing the use of fatty acid methyl esters and fatty alcohols

An example was made to analyse suitable fatty acid methyl esters and fatty alcohols in a composition with beeswax.

The following were analysed:
- Sample 18: 5% methyl behenate and 95% beeswax
- Sample 19: 5% oleyl alcohol and 95% beeswax
- Sample 20: 5% behenyl alcohol and 95% beeswax
- Sample 21: 5% behenyl alcohol, 5% oleic acid and 90% beeswax
- Sample 22: 5% oleyl alcohol, 5% acetic acid ester and 90% beeswax

A beeswax from Novero GmbH was used.

The different samples was analysed with respect to congealing point, penetration, flexibility, solidification time, and coating effect. This is shown in table 5
Table 5 also includes the evaluation "Poor", "acceptable", Preferred" and "Not useful" based on analyses of congealing point, penetration, flexibility, solidification time, and coating effect.

**Table 5:**

| Sample No. | 18 | 19 | 20 | 21 | 22 |
|---|---|---|---|---|---|
| Congealing point (°C) | 62 | 62 | 62 | 62 | 62.3 |
| Penetration (dmm) | 18.9 | 32.3 | 20.6 | 41.5 | 34.8 |
| Flexibility (Yes/No) | No | Yes | No | Yes | Yes |
| Solidification time (sec) | 1.7 | 1.2 | 0.7 | 1.6 | 1.3 |
| Coating effect (visual) | Acceptable | Poor | Poor | Poor | Acceptable |
| Overall acceptance | Acceptable | Poor | Not useful | Poor | Acceptable |

Table 5 shows that the use of methyl behenate in combination with a high amount of beeswax is acceptable for coating cheese. However, the use of behenyl alcohol is not suitable for use in a composition comprising a high amount of beeswax, either alone or in combination with an unsaturated fatty acid, such as oleic acid. It was also found that a composition comprising 90% beeswax, 5% oleyl alcohol and acetic acid ester was acceptable as a coating composition.

Oleyl alcohol is suitable for use in coating compositions if for example in combination with an acetic acid ester.

### Example 5: Analysing the use of emulsifiers and vegetable wax

An example was made to analyse the use of emulsifiers and vegetable wax in the composition comprising beeswax and oleic acid.

The following were analysed:
- Sample 23: 5% oleic acid, 5% candelilla wax and 90% beeswax
- Sample 24: 10% oleic acid, 5% candelilla wax and 85% beeswax
- Sample 25: 10% oleic acid, 10% candelilla wax and 80% beeswax
- Sample 26: 10% oleic acid, 5% acetic acid ester, 85% bees wax
- Sample 27: 5% oleic acid, 10% acetic acid ester, 85% bees wax
- Sample 28: 10% oleic acid, 10% acetic acid ester, 80% bees wax
- Sample 29: 2% oleic acid 5% candelilla wax, 10% acetic acid ester and 83% beeswax
- Sample 30: 5% oleic acid 5% candelilla wax, 10% acetic acid ester and 80% beeswax
- Sample 31: 5% oleic acid 5% candelilla wax, 5% acetic acid ester and 85% beeswax
- Sample 32: 5% oleic acid, 5% acetic acid ester, 10% acetic acid ester and 80% beeswax

A beeswax from Novero GmbH was used.

Candelilla wax from Novero GmbH was used as the vegetable wax.

Acetic acid ester of monoglycerides was used as emulsifier, GRINDSTED^{®} Acetem 70-00 P.

The different samples was analysed with respect to congealing point, penetration, flexibility, solidification time, and coating effect. This is shown in table 6

Table 6 also includes the evaluation "Poor", "acceptable", Preferred" and "Not useful" based on analyses of congealing point, penetration, flexibility, solidification time, and coating effect.

From table 6, it is shown that composition comprising a high amount of beeswax and a unsaturated fatty acid also can comprise vegetable wax and/or emulsifiers. As vegetable wax is used candelilla wax, but other waxes as disclosed in the description are suitable. As emulsifier is used acetic acid ester, but other emulsifiers as disclosed in the description could be used.

**Table 6:**

| Sample No. | 23 | 24 | 25 | 26 | 27 | 28 | 29 | 30 | 31 | 32 |
|---|---|---|---|---|---|---|---|---|---|---|
| Congealing point (°C) | 61.3 | 61 | 60 | 61 | 61 | 61 | 62.3 | 46.5 | 36.2 | 46 |
| Penetration (dmm) | 29 | 39.9 | 36.1 | 52.2 | 51.9 | 65.3 | 24.3 | 61 | 62 | 61 |
| Flexibility (Yes/No) | Yes | Yes | Yes | Yes | Yes | Yes | Yes | Yes | Yes | No |
| Solidification time (sec) | 2.7 | 0.95 | 2.3 | 1.85 | 1.3 | 1.3 | 1.3 | 1.6 | 0.7 | 1.8 |
| Coating effect (visual) | Good | Accept. | Good | Good | Accept. | Good | Good | Good | Good | Good |
| Overall acceptance | Preferred | Accept. | Preferred | Preferred | Accept. | Preferred | Preferred | Preferred | Preferred | Accept. |

### Example 6: Comparative analysis of petroleum-based waxes

Comparative data are shown of petroleum-based coating compositions.

The petroleum-based (mineral based) waxes are also considered to be good coating materials for cheese. The coating compositions for cheese according to the present invention are comparative to those petroleum-based coating compositions.

In table 8 below, the analyses of congealing point, penetration, viscosity, WVTR, OTR, tensile stength, flexibility, solidification time, and coating effect are shown of the following four petroleum-based waxes:
ProCera^{®}Basic, Procudan A/S
ProCera^{®}Special, Procudan A/S
ProCera^{®}Colour, Procudan A/S
ProCera^{®}Finish, Procudan A/S

**Table 8:**

| | ProCera^{®} Basic | ProCera^{®} Special | ProCera^{®} Finish | ProCera^{®} Colour |
|---|---|---|---|---|
| Congelating point (°C) | 51 | 60.8 | 58.0 | 62.8 |
| Penetration (dmm) | 67.6 | 63.2 | 48.0 | 50.0 |
| Viscosity (mPa·s) | 3.9 | 5.9 | 4.6 | 6.1 |
| WVTR (g·mm/m²·day) | 17.7 | 9.4 | 13.2 | 13.2 |
| OTR (ml/m²/day/atm) | 1472 | 1777 | 780 | 566 |
| Tensile strength (MPa) | 0.33 | 0.22 | 0.59 | 0.56 |
| Flexibility(Yes/No) | Yes | Yes | Yes | Yes |
| Solidification time (sec) | 2.7 | 1.9 | 2.1 | 2.5 |
| Coating effect (visual) | Good | Good | Good | Good |
| Overall acceptance | Preferred | Preferred | Preferred | Preferred |

## Claims

1. A composition for coating cheese, wherein the composition consists of:
a) beeswax in an amount of 70% to 95% by weight, and
b) at least one further compound selected from the group consisting of unsaturated fatty acids and fatty acid methyl esters in an amount of 2.5% to 30% by weight
c) optionally one or more compound(s) selected from the group consisting of emulsifiers and vegetable waxes
d) optionally a coloring agent.

2. The composition according to claim 1, wherein the unsaturated fatty acid is selected from the group consisting of oleic acid, linoleic acid, palmitoleic acid and erucic acid.

3. The composition according to claim 2, wherein the unsaturated fatty acid is selected from the group consisting of oleic acid, linoleic acid and erucic acid.

4. The composition according to claim 1, wherein the fatty acid methyl ester is a methyl ester of a saturated fatty acid.

5. The composition according to claim 4, wherein the methyl ester of a saturated fatty acid is selected from the group consisting of methyl behenate, methyl palmitate and methyl stearate.

6. The composition according to any of the claims 1 to 5, wherein the at least one further compound in the composition comprises two or more compounds selected from the group consisting of unsaturated fatty acids and fatty acid methyl esters.

7. The composition according to any of the claims 1 to 6, wherein:
a) bees wax is present in an amount of 85% to 95% by weight, and
b) at least one further compound selected from the group consisting of unsaturated fatty acids and fatty acid methyl esters is present in an amount of 5% to 15% by weight.

8. The composition according to any of the claims 1 to 7, wherein the emulsifier is selected from the group consisting of acetic acid esters of glycerides, lactic acid esters of glycerides, diacetyl tartaric acid esters of glycerides, esters of sorbitans and combinations thereof.

9. The composition according to any of the claims 1 to 8, wherein the vegetable wax is one or more selected from the group consisting of candelilla wax, carnauba wax, rice bran wax, coconut wax, palm-based wax, soy-based wax, rapeseed-based wax and combinations thereof.

10. The composition according to claim 9, wherein the vegetable wax is one or more selected from the group consisting candelilla wax, coconut wax, palm-based wax, soy-based wax and rapeseed-based wax.

11. Cheese coated with the composition according to any of the claims 1 to 10.

## Patentansprüche

1. Zusammensetzung zur Beschichtung von Käse, wobei die Zusammensetzung aus Folgendem:
a) Bienenwachs in einer Menge von 70 Gew.-% bis 95 Gew.-%, und
b) mindestens eine weitere Verbindung, ausgewählt aus der Gruppe, bestehend aus ungesättigten Fettsäuren und Fettsäuremethylestern, in einer Menge von 2,5 Gew.-% bis 30 Gew.-%
c) wahlweise, eine oder mehrere Verbindung(en), ausgewählt aus der Gruppe, bestehend aus Emulgatoren und pflanzlichen Wachsen
d) wahlweise, einen Farbstoff.

2. Zusammensetzung nach Anspruch 1, wobei die ungesättigte Fettsäure ausgewählt ist aus der Gruppe, bestehend aus Ölsäure, Linolsäure, Palmitoleinsäure und Erucasäure.

3. Zusammensetzung nach Anspruch 2, wobei die ungesättigte Fettsäure ausgewählt ist aus der Gruppe, bestehend aus Ölsäure, Linolsäure und Erucasäure.

4. Zusammensetzung nach Anspruch 1, wobei der Fettsäuremethylester ein Methylester einer gesättigten Fettsäure ist.

5. Zusammensetzung nach Anspruch 4, wobei der Methylester einer gesättigten Fettsäure aus der Gruppe, bestehend aus Methylbehenat, Methylpalmitat und Methylstearat, ausgewählt ist.

6. Zusammensetzung nach einem der Ansprüche 1 bis 5, wobei die mindestens eine weitere Verbindung in der Zusammensetzung zwei oder mehr Verbindungen umfasst, ausgewählt aus der Gruppe, bestehend aus ungesättigten Fettsäuren und Fettsäuremethylestern.

7. Zusammensetzung nach einem der Ansprüche 1 bis 6, wobei:
a) Bienenwachs in einer Menge von 85 Gew.-% bis 95 Gew.-% vorhanden ist, und
b) mindestens eine weitere Verbindung, ausgewählt aus der Gruppe, bestehend aus ungesättigten Fettsäuren und Fettsäuremethylestern, in einer Menge von 5 Gew.-% bis 15 Gew.-% vorhanden ist.

8. Zusammensetzung nach einem der Ansprüche 1 bis 7, wobei der Emulgator ausgewählt ist aus der Gruppe, bestehend aus Essigsäureestern von Glyceriden, Milchsäureestern von Glyceriden, Diacetylweinsäureestern von Glyceriden, Estern von Sorbitanen und Kombinationen davon.

9. Zusammensetzung nach einem der Ansprüche 1 bis 8, wobei das pflanzliche Wachs ein oder mehrere, ausgewählt aus der Gruppe, bestehend aus Candelillawachs, Carnaubawachs, Reiskleiewachs, Kokoswachs, palmbasiertem Wachs, sojabasiertem Wachs, rapsbasiertem Wachs und Kombinationen davon, ist.

10. Zusammensetzung nach Anspruch 9, wobei das pflanzliche Wachs eines oder mehrere, ausgewählt aus der Gruppe, bestehend aus Candelillawachs, Kokoswachs, Wachs auf Palmölbasis, Wachs auf Sojaölbasis und Wachs auf Rapsölbasis, ist.

11. Käse, beschichtet mit der Zusammensetzung nach einem der Ansprüche 1 bis 10.

## Revendications

1. Composition pour recouvrir du fromage, dans laquelle la composition est constituée de :
a) cire d'abeille en une quantité de 70 % à 95 % en poids, et
b) au moins un autre composé sélectionné dans le groupe constitué d'acides gras insaturés et d'esters méthyliques d'acides gras en une quantité de 2,5 % à 30 % en poids
c) facultativement un ou plusieurs composé(s) sélectionné(s) dans le groupe constitué d'émulsifiants et de cires végétales
d) facultativement un agent colorant.

2. Composition selon la revendication 1, dans laquelle l'acide gras insaturé est sélectionné dans le groupe constitué d'acide oléique, d'acide linoléique, d'acide palmitoléique et d'acide érucique.

3. Composition selon la revendication 2, dans laquelle l'acide gras insaturé est sélectionné dans le groupe constitué d'acide oléique, d'acide linoléique et d'acide érucique.

4. Composition selon la revendication 1, dans laquelle l'ester méthylique d'acide gras est un ester méthylique d'un acide gras saturé.

5. Composition selon la revendication 4, dans laquelle l'ester méthylique d'un acide gras saturé est sélectionné dans le groupe constitué de béhénate de méthyle, de palmitate de méthyle et de stéarate de méthyle.

6. Composition selon l'une quelconque des revendications 1 à 5, dans laquelle l'au moins un autre composé dans la composition comprend au moins deux composés sélectionnés dans le groupe constitué d'acides gras insaturés et d'esters méthyliques d'acides gras.

7. Composition selon l'une quelconque des revendications 1 à 6, dans laquelle :
a) la cire d'abeille est présente en une quantité de 85 % à 95 % en poids, et
b) au moins un autre composé sélectionné dans le groupe constitué d'acides gras insaturés et d'esters méthyliques d'acides gras est présent en une quantité de 5 % à 15 % en poids.

8. Composition selon l'une quelconque des revendications 1 à 7, dans laquelle l'émulsifiant est sélectionné dans le groupe constitué d'esters acétiques de glycérides, d'esters lactiques de glycérides, d'esters d'acide diacétyltartrique de glycérides, d'esters de sorbitanes et de combinaisons de ceux-ci.

9. Composition selon l'une quelconque des revendications 1 à 8, dans laquelle la cire végétale est une ou plusieurs cires sélectionnées dans le groupe constitué de cire de candelilla, de cire de carnauba, de cire de son de riz, de cire de coco, de cire à base de palme, de cire à base de soja, de cire à base de colza et de combinaisons de celles-ci.

10. Composition selon la revendication 9, dans laquelle la cire végétale est une ou plusieurs cires végétales sélectionnées dans le groupe constitué de cire de candelilla, de cire de coco, de cire à base de palme, de cire à base de soja et de cire à base de colza.

11. Fromage recouvert de la composition selon l'une quelconque des revendications 1 à 10.
